Europäisches Patentamt

European Patent Office

Office européen des brevets

(19)

(11) Veröffentlichungsnummer: **0 022 054**
**B1**

(12) **EUROPÄISCHE PATENTSCHRIFT**

(45) Veröffentlichungstag der Patentschrift:
**21.09.83**

(51) Int. Cl.³: **G 01 J 4/04**

(21) Anmeldenummer: **80730039.7**

(22) Anmeldetag: **04.06.80**

(54) **Polarimeter.**

(30) Priorität: **14.06.79 DE 2924438**

(43) Veröffentlichungstag der Anmeldung:
**07.01.81 Patentblatt 81/1**

(45) Bekanntmachung des Hinweises auf die Patenterteilung:
**21.09.83 Patentblatt 83/38**

(84) Benannte Vertragsstaaten:
**FR GB IT NL**

(56) Entgegenhaltungen:
**DE-A-1 547 200**
**DE-A-2 716 314**

(73) Patentinhaber: **Franz Schmidt & Haensch GmbH & Co.,**
**Naumannstrasse 33, D-1000 Berlin 62 (DE)**

(72) Erfinder: **Mau, Lothar, Burgherrenstrasse 10,**
**D-1000 Berlin 42 (DE)**

(74) Vertreter: **Meissner, Peter E., Dipl.-Ing. et al,**
**Patentanwälte Dipl.-Ing. Walter Meissner Dipl.-Ing. Peter**
**E. Meissner Dipl.-Ing. Hans-Joachim Presting**
**Herbertstrasse 22, D-1000 Berlin 33 (DE)**

EP 0 022 054 B1

ACTORUM AG

Polarimeter

Die Erfindung betrifft ein Polarimeter der im Oberbegriff des Anspruchs 1 genannten Art.

Polarimeter dieser Art sind allgemein aus der Literatur bekannt. Es wird die optische Aktivität einer Messlösung, d.h. der Winkel, um den die Schwingungsebene eines linear polarisierten Lichtstrahls bei Durchgang durch die Messlösung gedreht wird, direkt ermittelt, indem der Drehwinkel des Analysators gemessen wird, der nötig ist, um den Anfangszustand der maximalen Auslöschung wiederherzustellen. Aus Gründen der geforderten hohen Messgenauigkeit soll der Winkel, um den der Analysator gedreht werden muss, möglichst direkt, d.h. ohne irgendwelche zwischengeschalteten Glieder wie Getriebe, Abtriebsbänder oder ähnliches, am Analysator gemessen werden. Die Genauigkeit der Winkelmessung mittels solcher zwischengeschalteter Glieder unterliegt zeitlich nicht konstanten Fehlereinflüssen durch Spiel, Abrieb, Verschmutzung usw.

Für Präzisionspolarimeter ist es daher wünschenswert, die Drehung direkt am Analysator zu messen ohne die Zwischenschaltung irgendwelcher mechanischer Zwischenglieder. Die Messung kann am genauesten berührungslos optisch durch Abtastung einer starr mit dem Analysator verbundenen Teilscheibe erfolgen. Geräte dieser Art sind aus der Praxis bekannt (vgl. z.B. DE-OS 2 716 314). Sie sind jedoch sehr aufwendig und teuer, weil spezielle Winkelgeber mit Hohlachse zur Aufnahme des Analysators und zur Durchführung des Lichtstrahls vorhanden sein müssen. Dadurch blieb bisher die direkte optische Messung des Drehwinkels den Polarimetern der höchsten Preis- und Präzisionsklasse vorbehalten.

Der Erfindung liegt die Aufgabe zugrunde, ein Polarimeter der eingangs genannten Art mit geringem konstruktivem Aufwand so auszubilden, dass eine direkte Messung des Drehwinkels des Analysators möglich ist.

Diese Aufgabe wird erfindungsgemäss durch die im Kennzeichen des Patentanspruchs 1 angegebenen Merkmale gelöst.

Die weitere Ausbildung des Erfindungsgegenstandes geht aus den Unteransprüchen hervor.

Der mit der Erfindung erzielte Vorteil ist insbesondere darin zu sehen, dass aufgrund der Herauslenkung des polarisierten Lichtstrahles aus der optischen Achse auf einen speziell gefertigten Drehgeber mit Hohlachse verzichtet und statt dessen ein handelsüblicher verwendet werden kann, der aufgrund der starren Koppelung mit dem Analysator eine hohe Messgenauigkeit gewährleistet, die das Polarimeter auf das Niveau von Polarimetern der höchsten Präzisionsklasse hebt. Darüber hinaus sind diese handelsüblichen Drehgeber in ihren Abmessungen relativ klein, so dass ein sehr kompakter Aufbau der Polarimeter möglich wird.

Ein Ausführungsbeispiel der Erfindung wird nachstehend nach vorheriger Erläuterung eines Kreispolarimeters nach dem Stand der Technik unter Bezugnahme auf die Zeichnungen näher beschrieben. Es zeigen:

Fig. 1 eine Prinzipdarstellung eines automatischen Kreispolarimeters bekannter Bauart,

Fig. 2 eine Prinzipdarstellung eines automatischen Kreispolarimeters zur Erläuterung der Erfindung, und

Fig. 3 eine geschnittene Teilansicht des Kreispolarimeters nach Fig. 2, die den Bereich zwischen Analysator und Drehgeber umfasst.

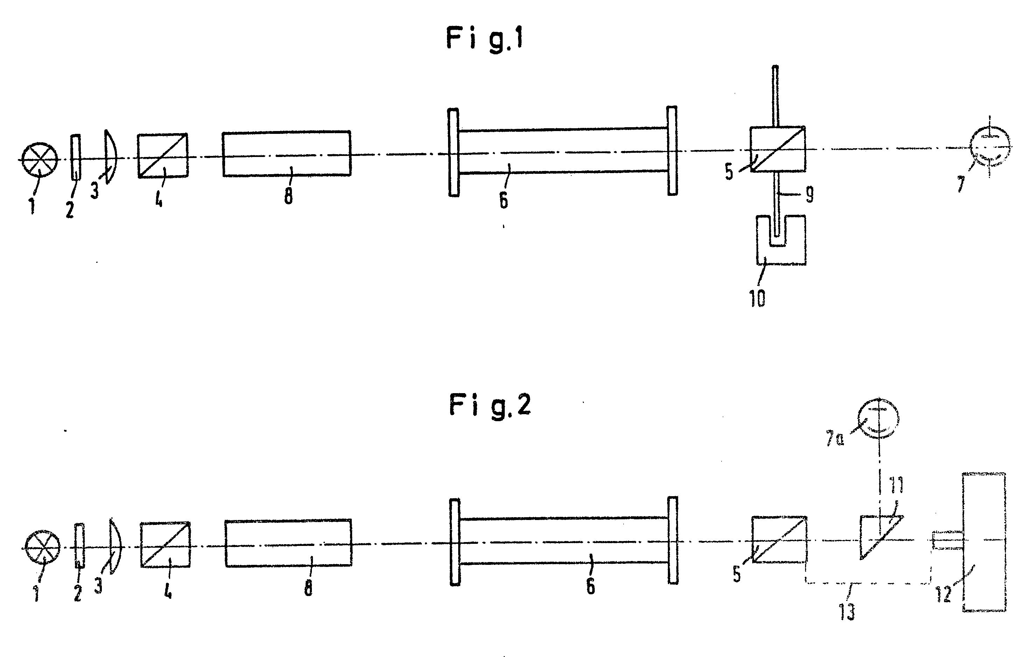

Fig. 1 gibt den üblichen optischen Strahlengang eines automatischen Kreispolarimeters wieder, wie er auch mehrfach in der einschlägigen Literatur beschrieben ist.

Aus der Lampe 1 tritt das Licht durch ein Interferenzfilter 2, wodurch monochromatisches Licht entsteht, dann durch eine Kondensorlinse 3 und verlässt diese als quasiparalleles Strahlenbündel. In einem Polarisator 4 wird das durchtretende Licht linear polarisiert. Ein weiterer Polarisator, der Analysator 5, steht im abgeglichenen Zustand des Polarimeters so, dass das durchtretende Licht maximal geschwächt wird. Im Probenrohr 6 kann sich als Messlösung eine optisch aktive Substanz befinden, die die Schwingungsebene des polarisierten Lichtes beim Durchgang dreht. Um wieder maximale Auslöschung zu erhalten, muss der Analysator 5 um genau diesen Winkel nachgedreht werden. Die maximale Auslöschung wird mit dem Photoempfänger 7, normalerweise ein Sekundärelektronenvervielfacher, bestimmt. Damit die maximale Auslöschung exakt eingestellt werden kann, wird die Schwingungsebene des polarisierten Lichtes in dem Faraday-Modulator 8 periodisch moduliert. Die zum Abgleich auf maximale Auslöschung nötige Drehung des Analysators 5 wird berührungslos gemessen, und zwar optisch durch Abtastung der starr mit ihm verbundenen Teilscheibe 9 mittels einer Abtasteinheit 10.

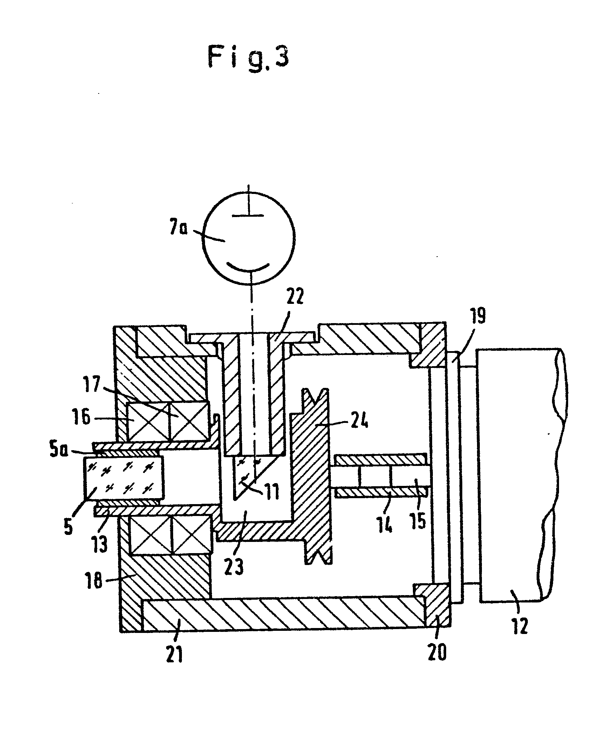

Fig. 2 zeigt unter Verwendung gleicher Bezugszeichen wie in Fig. 1 die getroffene Änderung im Strahlengang, um einen Drehgeber 12 ohne durchgehende Hohlachse zur direkten Messung der Drehung des Analysators 5 einsetzen zu können. Sie besteht darin, dass der Lichtstrahl durch ein Ablenkprisma 11 oder einen Spiegel aus der optischen Achse herausgelenkt wird, um auf einen seitlich stehenden Photoempfänger 7a zu treffen. Der Analysator 5 ist mit dem in einer gemeinsamen Drehachse liegenden Drehgeber 12 mittels eines hier nur gestrichelt dargestellten Verbindungsstückes 13 starr verbunden, von dem eine mögliche Ausführungsform in der Fig. 3 dargestellt ist und mit dieser zusammen beschrieben wird.

Gemäss Fig. 3 tritt der vom Probenrohr 6 kommende polarisierte Lichtstrahl von links durch den Analysator 5, trifft auf das Umlenkprisma 11, wird umgelenkt und trifft auf den Photoempfänger 7a. Der Analysator 5 und der Drehwertgeber 12 sind mittels eines im wesentlichen zylindrischen Verbindungsstückes 13 und einer Kupplung 14 starr verbunden, wobei das Verbindungsstück 13 in einer axialen Bohrung den Analysator 5 aufnimmt und auf dessen dem Drehgeber zugewandten Seite mit einer Querausnehmung 23 versehen ist, in die das an einer Halterung 22 angeordnete Umlenkprisma 11 in die optische Achse des Polarimeters hineinragt. Der Analysator ist mittels einer spannungsfreien Bettung 5a im Verbindungsstück 13 gehalten. Letzteres ist in zwei Kugellagern 16, 17 in einem Lagerschild 18 drehbar gelagert. Der Flansch 19 des Drehgebers 12 ist über ein weiteres Lagerschild 20 und ein Schutzrohr 21 mit dem Lagerschild 18 verbunden. An dem Schutzrohr 21 ist die Halterung 22 angeschraubt, die das Umlenkprisma 11 trägt.

Um grosse Drehwinkel des Analysators 5 zuzulassen, kann das Verbindungsstück 13 mit einer so tiefen Querausnehmung 23 versehen sein, dass nur noch ein schmaler Steg am Grund der Ausnehmung stehen bleibt.

Die Drehung des Analysators kann durch einen Antriebsriemen (nicht dargestellt) erfolgen, der auf einem als Antriebsscheibe 24 ausgebildeten zylindrischen Teilbereich des Verbindungsstükkes 13 aufliegt und durch einen Schlitz im Schutzrohr 21 nach aussen zu einem Antriebsmotor geführt ist.

**Patentansprüche**

1. Polarimeter mit
a) einer Lichtquelle (1) zur Erzeugung eines polarisierten Messlichtbündels,
b) einem von dem Messlichtbündel durchsetzten, um eine Achse drehbaren Analysator (5),
c) einem photoelektrischen Empfänger (7a), der von durch den Analysator getretenem Licht beaufschlagt ist,
d) einer Antriebseinrichtung für den Analysator zur automatischen Überführung desselben in eine Drehstellung maximaler Lichtauslöschung,
e) einem mit dem Analysator starr gekoppelten Drehgeber (12),
dadurch gekennzeichnet, dass
f) der Drehgeber (12) hinter dem Analysator (5) im Abstand zu diesem angeordnet und seine Drehachse (15) koaxial zur Achse des Analysators (5) ausgerichtet ist,
g) der Analysator (5) mit der Drehachse (15) des Drehgebers (12) durch eine mechanische Kopplung (13), die ausserhalb des axialen Bereichs zwischen Analysator und Drehgeber verläuft, starr verbunden ist,
h) in dem axialen Bereich zwischen Analysator (5) und Drehgeber (12) ein optisches Element (11) zur seitlichen Ablenkung von durch den Analysator getretenem Licht vorgesehen ist,
i) der photoelektrische Empfänger (7a) zur Aufnahme des seitlich abgelenkten Lichts angeordnet ist.

2. Polarimeter nach Anspruch 1, dadurch gekennzeichnet, dass die mechanische Kopplung folgende Teile umfasst:

j) ein am Aussenumfang drehbar gelagertes zylindrisches Rohrstück (13), in dessen einem Ende der Analysator (5) gehaltert ist und dessen Wandung im Bereich des anderen Endes eine Ausnehmung besitzt, durch die eine das optische Element (11) tragende und dieses im Innern (23) des Rohrstückes (13) positionierende Halterung (22) berührungsfrei ragt,
k) ein das andere Ende des Rohrstückes (13) mit der Drehachse (15) des Drehgebers (12) verbindendes Kupplungsstück (14).

3. Polarimeter nach Anspruch 1 oder 2, dadurch gekennzeichnet, dass das Rohrstück (13) einen als Antriebsscheibe (24) ausgebildeten Wandbereich besitzt, und dass das optische Element aus einem Umlenkprisma (11) besteht.

**Claims**

1. Polarimeter having
a) a light source (1) which serves to generate a polarized light beam to be measured,
b) an analyzer (5) which can be rotated about an axis and which is penetrated by the light beam to be measured,
c) a photo-electric receiver (7a) controlled by the light which has passed through the analyzer,
d) a driving device for the analyzer, which serves to automatically transfer said analyzer into a rotary position of maximal light extinction,
e) a rotating means (12) which is rigidly connected to the analyzer,
characterised in that
f) the rotating means (12) is arranged behind the analyzer (5) and spaced therefrom and its axis of rotation (15) is coaxially aligned to the axis of the analyzer (5),
g) the analyzer (5) is rigidly connected to the axis of rotation (15) of the rotating means (12) via a mechanical coupling (13) which runs outside the axial region between the analyzer and the rotating means,
h) in the axial region between the analyzer (5) and the rotating means (12), there is arranged an optical element (11) which serves to laterally deflect light which has passed through the analyzer,
i) the photo-electric receiver (7a) is arranged so as to receive the laterally deflected light.

2. Polarimeter as claimed in Claim 1, characterised in that the mechanical coupling comprises the following components:
j) a cylindrical pipe section (13) which is pivoted to the outer circumference and in whose one end the analyzer (5) is held and whose wall possesses an opening in the region of the other end, through which opening a holder (22), which supports the optical element (11) and positions the latter inside (23) the pipe section (13), projects without contact,
k) a coupling piece (14) which connects the other end of the pipe section (13) to the axis of rotation (15) of the rotating means (12).

3. Polarimeter as claimed in Claim 1 or 2, characterised in that the pipe section (13) possesses a wall region designed as a driving disc (24), and that the optical element (11) consists of a deviating prism (11).

## Revendications

1. Polarimètre avec
   a) une source lumineuse (1) engendrant un faisceau lumineux de mesure polarisé,
   b) un analyseur (5) tournant autour d'un axe et traversé par ledit faisceau lumineux,
   c) un récepteur photoélectrique (7a) qui reçoit la lumière traversant l'analyseur,
   d) un dispositif d'entraînement de l'analyseur, pour amener automatiquement celui-ci dans une position de rotation d'extinction de lumière maximale,
   e) un résolveur (12) rigidement couplé avec l'analyseur,
   caractérisé en ce que
   f) le résolveur (12) est agencé derrière l'analyseur (5) en étant écarté de celui-ci et son axe de rotation (15) est coaxial à l'axe de l'analyseur (5),
   g) l'analyseur (5) est rigidement lié à l'axe de rotation (15) du résolveur (12) par l'intermédiaire d'un accouplement mécanique (13), qui est disposé à l'extérieur de l'espace axial entre l'analyseur et le résolveur,
   h) dans l'espace axial entre l'analyseur (5) et le résolveur (12) est prévu un élément optique (11) pour dévier latéralement la lumière traversant l'analyseur, et
   i) le récepteur photoélectrique (7a) est agencé pour recevoir la lumière déviée latéralement.

2. Polarimètre selon la revendication 1, caractérisé en ce que l'accouplement mécanique comporte les pièces suivantes:
   j) une pièce tubulaire cylindrique (13) montée rotative à sa périphérie, à une extrémité de laquelle est monté l'analyseur (5) et dont la paroi présente une échancrure au voisinage de l'autre extrémité, échancrure à travers laquelle fait saillie, sans contact, un support (22) portant l'élément optique (11) et positionnant celui-ci à l'intérieur (23) de la pièce tubulaire (13),
   k) une pièce d'accouplement (14) reliant l'autre extrémité de la pièce tubulaire (13) avec l'axe rotatif (15) du résolveur (12).

3. Polarimètre selon l'une des revendications 1 ou 2, caractérisé en ce que la pièce tubulaire (13) comporte une portion conformée en disque d'entraînement (24) et en ce que l'élément optique comporte un prisme de déviation (11).

Fig.1

Fig.2

# Fig.3